# EUROPEAN PATENT APPLICATION

(11) **EP 4 814 686 A1**
(43) Date of publication of application: **30.09.2026**
(21) Application number: 25194847.7
(22) Date of filing: 08.08.2025
(51) Int. Cl.: G06F 3/12, G06K 15/02

(54) **PRINTING CONTROL SYSTEM, PRINTING CONTROL PROGRAM, AND PRINTING CONTROL METHOD**

(30) Priority: 25.03.2025 JP 2025050012
(71) Applicant: FUJIFILM Business Innovation Corp., Minato-ku Tokyo (JP)
(72) Inventor: NAKAMURA, Yoshinobu, Yokohama-shi, Kanagawa (JP)
(74) Representative: Becker Kurig & Partner Patentanwälte mbB

(57) **Abstract**

A printing control system includes: a processor configured to: convert printing jobs that are received into printable data formats using a data conversion module; determine whether the number of pages included in the printing jobs before data conversion exceeds the number of pages set in advance in a case where the printing jobs before the data conversion reach a consecutive number set in advance; and execute, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion; and a memory.

## Description

### BACKGROUND OF THE INVENTION

### (i) Field of the Invention

The technology of the present disclosure relates to a printing control system, a printing control program, and a printing control method.

### (ii) Description of Related Art

JP2012-059093A discloses a printing control device including a plurality of conversion units configured to activate a plurality of drawing processing unit that perform drawing processing based on a printing instruction to generate printing data, a storage unit configured to store a printing instruction waiting for printing, a determination unit configured to determine whether the number of pages in the printing instruction is larger than a threshold value that is set, an assignment unit configured to assign the printing instruction, for which the determination unit determines that the number of pages is equal to or less than the threshold value that is set, to some conversion units among the plurality of conversion units, and a selection unit configured to select, in a case where the assignment unit assigns the printing instruction in which the number of pages is equal to or less than the threshold value to some conversion units among the plurality of conversion units, a printing instruction, in which the number of pages is equal to or less than the threshold value, from among subsequent printing instructions stored in the storage unit, in which the assignment unit is configured to assign the printing instruction selected by the selection unit to a conversion unit other than a conversion unit to which another printing instruction has already been assigned.

### SUMMARY OF THE INVENTION

In data conversion processing in a case where a printing job with a large number of pages and a printing job with a small number of pages are input in a mixed manner, more specifically, in a raster image processing (RIP), the processing may be switched into job parallel processing of processing a plurality of printing jobs in parallel in a case where a printing job with a number of pages less than a threshold value is input, and the processing may be switched into a page parallel processing of processing one printing job in parallel for each page in a case where a printing job with a number pages more than the threshold value is input. Here, the printing using the printing device is generally performed in order in which the printing device has received the printing jobs. Therefore, for example, in a case where printing jobs that exceed the threshold value are alternately and consecutively input, the switching of the processing also consecutively occurs. For example, since the switching of the processing requires a large memory capacity for reset processing or the like, the number of times of the switching may be small.

In consideration of the above-described problems, an object of the present disclosure is to provide a printing control system, a printing control program, and a printing control method capable of saving a required memory capacity in a case where a printing job with a large number of pages and a printing job with a small number of pages are mixed, as compared to a case where switching is performed whenever the number of pages of the printing job exceeds a threshold value.

In order to achieve the above object, a printing control system according to a first aspect of the present disclosure includes: a processor configured to: convert printing jobs that are received into printable data formats using a data conversion module; determine whether the number of pages included in the printing jobs before data conversion exceeds the number of pages set in advance in a case where the printing jobs before the data conversion reach a consecutive number set in advance; and execute, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion; and a memory.

According to a second aspect of the present disclosure, in the printing control system according to the first aspect, the processor may be configured to: execute, in a case where the number of pages included in the printing jobs on which the data conversion is to be performed exceeds the number of pages set in advance, page parallel processing of activating the plurality of data conversion modules, respectively assigning the plurality of data conversion modules to specific pages of the printing jobs on which the data conversion is to be performed, and performing parallel processing of the data conversion on the printing jobs on which the data conversion is to be performed.

According to a third aspect of the present disclosure, in the printing control system according to the first or second aspect, the processor may be configured to: end the job parallel processing in a case where a determination is made that the number of pages of the printing jobs on which the data conversion is to be performed is larger than the number of pages set in advance in a state in which the job parallel processing is executed.

According to a fourth aspect of the present disclosure, the printing control system according to any one of the first to third aspects may further includes: a user interface configured to set at least one of the consecutive number set in advance or the number of pages set in advance.

According to a fifth aspect of the present disclosure, in the printing control system according to any one of the first to fourth aspects, the processor may be configured to: adjust the number of the plurality of data conversion modules respectively assigned to the plurality of printing jobs before the data conversion to be equal to or less than a maximum assignment number set in advance.

According to a sixth aspect of the present disclosure, in the printing control system according to any one of the first to fifth aspects, the processor may be configured to: adjust the number of the plurality of data conversion modules to be equal to or less than a maximum module number set in advance.

According to a seventh aspect of the present disclosure, in the printing control system according to any one of the first to sixth aspects, the processor may be configured to: collect additional information included in the printing jobs before the data conversion; and adjust, based on the additional information, the number of data conversion modules constituting the plurality of data conversion modules assigned to the printing jobs before the data conversion.

According to an eighth aspect of the present disclosure, in the printing control system according to any one of the first to seventh aspects, the processor may be configured to: interrupt processing being executed other than the data conversion in a case where a memory capacity required for the parallel processing is insufficient.

A printing control program according to a ninth aspect of the present disclosure causes a processor included in a printing control system to execute processing of: converting printing jobs that are received into printable data formats using a data conversion module; determining whether the number of pages included in the printing jobs before data conversion exceeds the number of pages set in advance in a case where the printing jobs before the data conversion reach a consecutive number set in advance; and executing, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion.

A printing control method according to a tenth aspect of the present disclosure includes: converting printing jobs that are received into printable data formats using a data conversion module; determining whether the number of pages included in the printing jobs before data conversion exceeds the number of pages set in advance in a case where the printing jobs before the data conversion reach a consecutive number set in advance; and executing, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion.

According to the first aspect of the present invention, it is possible to reduce the number of times of switching processing in a case where a printing job having a small number of pages and a printing job having a large number of pages are alternately input, by executing the job parallel processing only in a case where printing jobs having a small number of pages are consecutive for a predetermined number. Accordingly, it is possible to save a memory capacity required for data conversion of the consecutive printing jobs, as compared to a case where processing is switched based only on the number of pages of the printing job.

According to the second aspect of the present invention, the page parallel processing is executed, so that a speed of the data conversion in a case of converting data of a printing job having a large number of pages is higher, as compared to a case of uniformly performing the data conversion regardless of the number of pages of the job.

According to the third aspect of the present invention, in a case where printing jobs having a small number of pages are not consecutive, the job parallel processing is quickly ended, and thus the data conversion of the printing job having a large number of pages is not performed in the state of the job parallel processing.

According to the fourth aspect of the present invention, the consecutive number and the number of pages set in advance can be set and changed by a user.

According to the fifth aspect of the present invention, the assignment of the data conversion modules in the job parallel processing can be adjusted by the user.

According to the sixth aspect of the present invention, the assignment of the data conversion modules in the job parallel processing can be adjusted by the user.

According to the seventh aspect of the present invention, even in a case where the additional information having an effect on the data conversion speed, such as a transparent effect or shading, is included in the printing job, the assignment of the data conversion module in consideration of the presence or absence of the additional information can be performed.

According to the eighth aspect of the present invention, a processing speed of the entire printing control is increased by executing the data conversion with priority over other processing, as compared to a case where the data conversion is set to a standby state in a case where the memory capacity required for the data conversion is insufficient.

According to the ninth aspect of the present invention, it is possible to reduce the number of times of switching processing in a case where a printing job having a small number of pages and a printing job having a large number of pages are alternately input, by executing the job parallel processing only in a case where printing jobs having a small number of pages are consecutive. Accordingly, it is possible to save a memory capacity required for data conversion of the consecutive printing jobs, as compared to a case where processing is switched based only on the number of pages of the printing job.

According to the tenth aspect of the present invention, it is possible to reduce the number of times of switching processing in a case where a printing job having a small number of pages and a printing job having a large number of pages are alternately input, by executing the job parallel processing only in a case where printing jobs having a small number of pages are consecutive. Accordingly, it is possible to save a memory capacity required for data conversion of the consecutive printing jobs, as compared to a case where processing is switched based only on the number of pages of the printing job.

### BRIEF DESCRIPTION OF THE DRAWINGS

Exemplary embodiment(s) of the present invention will be described in detail based on the following figures, wherein:
FIG. 1 is a schematic diagram exemplarily showing an example of a printing control system according to an exemplary embodiment of the technology of the present disclosure;
FIG. 2 is a block diagram showing an example of a hardware configuration of the printing control system shown in FIG. 1;
FIG. 3 is a functional block diagram showing an example of a function of the printing control system shown in FIG. 1;
FIG. 4 is a diagram showing an example of an input screen for RIP processing information;
FIG. 5 is a flowchart showing an example of an operation of the printing control system shown in FIG. 1;
FIG. 6 is a flowchart showing an example of a subroutine of job parallel processing shown in FIG. 5; and
FIG. 7 is a flowchart showing an example of a subroutine of page parallel processing shown in FIG. 5.

### DETAILED DESCRIPTION OF THE INVENTION

Hereinafter, an example of an exemplary embodiment of the technology of the present disclosure will be described with reference to the drawings. In the following, a range necessary for description for achieving an object of the present disclosure is schematically shown, and a range necessary for description of a corresponding part of the present disclosure will be generally described. For a part where the description is omitted, it is assumed that the part is based on the known art. The identical reference numerals are given to the identical or equivalent components and parts in each drawing. In addition, the dimensional ratios in the drawings are exaggerated for convenience of description and may differ from the actual ratios. Furthermore, in a case where a plurality of members that are the same or corresponding to each other are included in the drawing, reference numerals may be given to only some of the members in order to make the drawing easy to see.

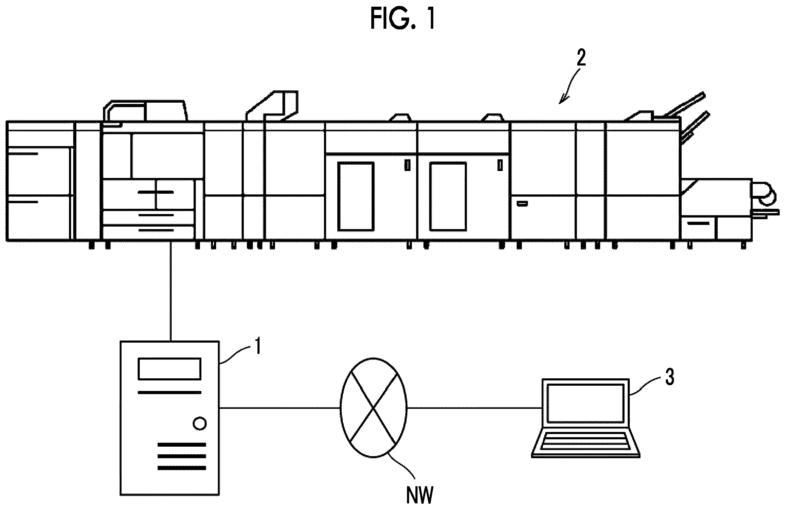

FIG. 1 is a schematic diagram exemplarily showing an example of a printing control system according to an exemplary embodiment of the technology of the present disclosure. As shown in FIG. 1, the printing control system 1 according to the present exemplary embodiment can be configured by a server apparatus (in other words, a print server) that controls the printer device 2. In addition, the printing control system 1 configured by the server apparatus may be communicably connected to a terminal device 3.

The printer device 2 may be configured as, for example, a production printer. The production printer is a printer that performs printing for an in-house printing department of a company, a print shop, or the like, and is generally capable of performing a large amount of printing. The printer device 2 is communicably connected to the printing control system 1 and executes a printing process based on a control signal from the printing control system 1. Since various components and the operation contents of the printer device 2 composed of the production printer can adopt the same components and the same operation contents as those of a well-known production printer, the detailed description thereof will be omitted here. The printer device 2 is not limited to the above-described production printer, and may be a general printer such as a printer for business or a printer for home.

The terminal device 3 may be one or a plurality of devices that can be wirelessly or wiredly connected to the printing control system 1, and can be configured with a well-known computer typified by a personal computer, a tablet terminal, a smartphone, or the like. A terminal device 3 shown in FIG. 1 can be connected to the printing control system 1 via a network NW. The terminal device 3 can generate a printing job (printing instruction) and transmit the generated printing job to the printing control system 1 via the network NW. The data conversion is performed on the printing job transmitted from the terminal device 3 in the printing control system 1 to be printed by the printer device 2, and then an image corresponding to the printing job is output on continuous paper or cut paper cut into a predetermined size in advance by the printer device 2.

The printing job transmitted from the terminal device 3 includes information such as print content described in a page description language (PDL). Examples of the PDL include PostScript, Portable Document Format (PDF), and Printer Control Language (PCL).

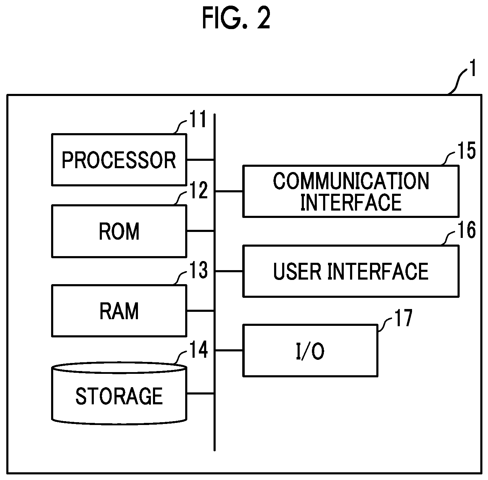

FIG. 2 is a block diagram showing an example of a hardware configuration of the printing control system shown in FIG. 1. The printing control system 1 can be configured by a known computer as shown in FIG. 2. In the present exemplary embodiment, a case where the printing control system 1 is configured by one server apparatus has been described as an example, but the printing control system 1 can be implemented in various aspects. For example, the printing control system 1 can be implemented by combining a plurality of server apparatuses or by using a network server represented by a cloud server.

The printing control system 1 configured by a known computer may include at least a processor 11, a read-only memory (ROM) 12, a random-access memory (RAM) 13, a storage 14, a communication interface 15, a user interface 16, and an input/output unit (I/O) 17. In addition, the components may be connected to each other to be communicable with each other via an internal bus.

The processor 11 may be configured with, for example, a central processing unit (CPU), and may execute various programs or control various components of the printing control system 1. The processor 11 may read a program from the ROM 12 or the storage 14 and execute the program using the RAM 13 as a work area. The processor 11 can perform various types of arithmetic processing and the like in accordance with the program recorded in the ROM 12 or the storage 14.

The ROM 12 can store various programs and various data. The RAM 13 can temporarily store a program or data as a work area. The storage 14 may be configured with a storage device such as a hard disk drive (HDD) or a solid state drive (SSD), a flash memory, and the like, and can store various programs including an operating system and various data. The ROM 12, the RAM 13, and the storage 14 described above are examples of a memory.

The communication interface 15 may be an interface for communicating with the printer device 2 or the terminal device 3. As a communication method of the communication interface 15, wired or wireless communication is used, and as a communication standard, for example, Ethernet (registered trademark), FDDI, Wi-Fi (registered trademark), or the like may be used.

The user interface 16 may be an interface in a case where the user uses the printing control system 1. The user interface 16 may include, for example, an input unit including a button, a touch panel, a pointing device, and the like, and a display unit configured with a liquid crystal display or an organic EL display. The user who operates the user interface 16 includes a manager who manages the printer device 2. In addition, I/O 17 may function to connect the processor 11 to each unit of the printing control system 1.

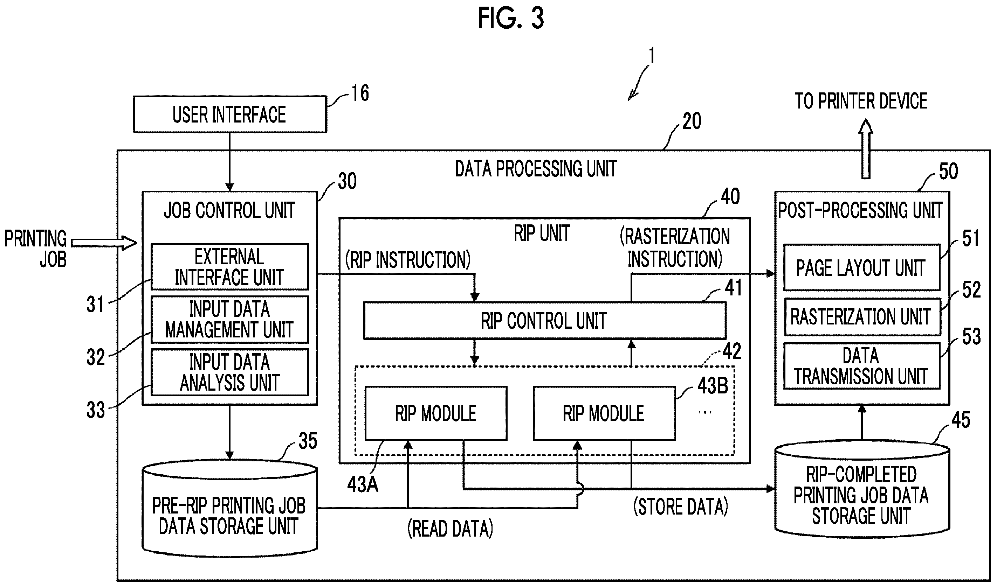

FIG. 3 is a functional block diagram showing an example of a function of the printing control system shown in FIG. 1. Hereinafter, various types of processing in the printing control system 1 including the hardware configuration described above will be described below with reference to the functional block diagram shown in FIG. 3. Various types of processing described below can be generally implemented by the processor 11.

As shown in FIG. 3, the printing control system 1 according to the present exemplary embodiment may include a data processing unit 20. In the data processing unit 20, the printing job input from the terminal device 3 or the like may be adjusted to a format that can be output by the printer device 2 and sequentially transmitted to the printer device 2. The data processing unit 20 can be implemented by, for example, a digital front end (DFE).

The data processing unit 20 may include a job control unit 30 that receives the printing job transmitted from the terminal device 3, a RIP unit 40 that performs the RIP processing of the printing job based on an RIP instruction included in the printing job, and a post-processing unit 50 that converts the printing job on which the RIP processing has been performed by the RIP unit 40 into raster data that can be output by the printer device 2.

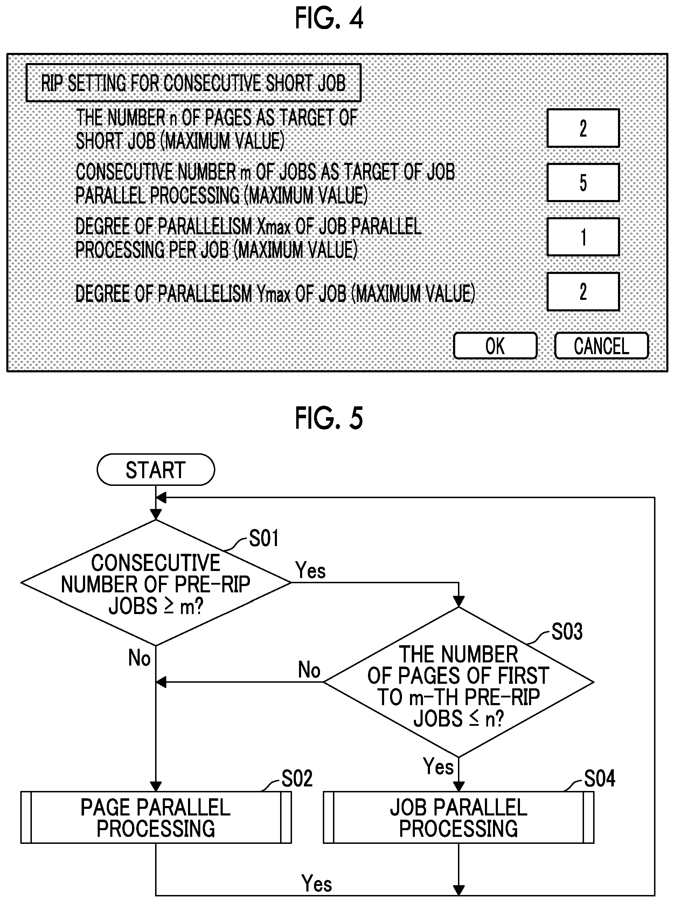

The job control unit 30 may include an external interface unit 31 that receives a printing job transmitted from an external device such as the terminal device 3, an input data management unit 32 that manages the printing job received by the external interface unit 31 as input data, and an input data analysis unit 33 that analyzes the input data. In addition, the job control unit 30 generates the RIP instruction to be transmitted to the RIP unit 40 based on RIP processing information (see FIG. 4) input through the user interface 16.

Among various components included in the job control unit 30, the input data management unit 32 can assign a job ID to the received printing job and manage the printing job setting information, part data, and the like as input data in association with the job ID. In addition, the input data analysis unit 33 can analyze the received printing job and extract various types of information such as a page size, a color space, a font, a special color, and an object to which a transparent effect is applied. Further, the printing job received by the job control unit 30 can be stored in a pre-RIP printing job data storage unit 35.

The job control unit 30 having the above-described configuration generates a RIP instruction related to the received printing job based on the information analyzed by the input data analysis unit 33 and the RIP processing information each time the printing job is received, and transmits the RIP instruction to the RIP unit 40. Then, the received printing job is stored in the pre-RIP printing job data storage unit 35 as a pre-RIP printing job at least temporarily.

In the present exemplary embodiment, the above-described RIP processing information may be information input through the user interface 16. In the present exemplary embodiment, a case where the RIP processing information is acquired from the user interface 16 has been exemplified, but the present disclosure is not limited thereto. For example, the RIP processing information may be inferred using a trained model that has learned past results of the RIP processing of the printing job.

FIG. 4 is a diagram showing an example of an input screen for RIP processing information. The RIP processing information input through the user interface 16 is specified by the user inputting a numerical value along the input screen as shown in FIG. 4, for example, and is sent to the job control unit 30. The RIP processing information sent to the job control unit 30 includes at least a threshold value m of a consecutive number of printing jobs for determining whether to execute job parallel processing, which will be described later. The threshold value m is an example of a consecutive number set in advance.

In addition, in the present exemplary embodiment, in addition to the threshold value m of the consecutive number of the printing job, a threshold value n of the number of pages used in a case of determining whether the printing job is a printing job having a relatively small number of pages (hereinafter, also referred to as a short job) or a printing job having a relatively large number of pages (hereinafter, also referred to as a long job) can be input as the RIP processing information. The threshold value n is an example of the number of pages set in advance.

Further, in the present exemplary embodiment, a maximum value Xmax of the number of RIP modules 43A, 43B, ... to be assigned to one printing job in a case of performing the job parallel processing and a maximum value Ymax of the number of RIP modules 43A, 43B, ... that can be activated in the RIP unit 40 can be further input as the RIP processing information. The maximum value Xmax is an example of a maximum assignment number, and the maximum value Ymax is an example of a maximum module number. For example, in a case where the maximum value Xmax is 2, it is possible to assign a maximum of two RIP modules to one printing job in a case of performing the job parallel processing. In addition, for example, in a case where the maximum value Ymax is 5, the RIP control unit 41 can activate up to five RIP modules.

The RIP unit 40 performs the RIP processing of the printing job based on the RIP instruction transmitted from the job control unit 30. The RIP unit 40 may include a RIP control unit 41 that controls processing contents and the like executed based on the RIP instruction, and a RIP module group 42 that executes the RIP processing of the printing job based on an instruction from the RIP control unit 41.

The RIP control unit 41 acquires the RIP instruction sent from the job control unit 30, and controls the RIP processing of the printing job such that the RIP processing of the printing job is executed in order in which the RIP instruction is acquired. The RIP instruction includes a PDL used for the printing job, whether the printing job is a short job or a long job described later, the presence or absence of additional information, and the like, but is not limited thereto. The RIP control unit 41 can hold a plurality of acquired RIP instructions, and can get information on the number of printing jobs before the RIP processing, in other words, the number of printing jobs in a state of waiting for the RIP processing, from the number of held RIP instructions.

The RIP module group 42 is a module that executes the RIP processing of the printing job. The RIP module group 42 includes a plurality of RIP modules 43A, 43B, ..., and the plurality of RIP modules 43A, 43B, ... can be activated or deactivated in accordance with the content of the RIP processing to be executed. In other words, the number of RIP modules 43A, 43B, ... constituting the RIP module group 42 can be changed to one or a plurality of modules in accordance with the RIP processing to be executed. The maximum value Ymax (see FIG. 4) of the number of RIP modules 43A, 43B, ... constituting the RIP module group 42 of the present exemplary embodiment can be set by the user as described above.

The RIP modules 43A, 43B, ... constitute a processing apparatus for performing the RIP processing of the printing job, and are selectively used in accordance with the PDL included in the printing job. The RIP modules 43A, 43B, and the like include, for example, a configurable postscript interpreter (CPSI) which is an interpreter of a postscript language, and an Adobe PDF print engine (APPE) which is a PDF native printing processing engine. In other words, the CPSI or the APPE is activated as the RIP module in accordance with the printing job for which the RIP processing is performed, and the RIP processing is executed. The RIP modules 43A, 43B, ... are examples of a data conversion module.

In a case where the RIP modules 43A, 43B, ... perform the RIP processing, the RIP modules 43A, 43B, ... read printing job data for performing the RIP processing from the pre-RIP printing job data storage unit 35 and execute the RIP processing based on the instruction from the RIP control unit 41. Intermediate data before rasterization generated by executing the RIP processing is stored in the RIP-completed printing job data storage unit 45. In FIG. 3, the pre-RIP printing job data storage unit 35 and the RIP-completed printing job data storage unit 45 are shown as different configurations for convenience of description, but both can be configured by a part of the ROM 12 or the storage 14 and can be shared.

In a case where job parallel processing is not performed, the RIP unit 40 according to the present exemplary embodiment executes the RIP processing by using at least one RIP module (for example, the RIP module 43A) in a case where RIP processing is performed on one printing job. Therefore, in the RIP module group 42, only one RIP module 43A is in a state of being activated at all times during the operation of the RIP unit 40. In addition, the RIP unit 40 can execute page parallel processing of performing RIP processing on one printing job using a plurality of RIP modules.

The job parallel processing described above is a method of respectively assigning one or a plurality of RIP modules to a plurality of printing jobs and performing RIP processing on the plurality of printing jobs in parallel using the plurality of RIP modules. On the other hand, the page parallel processing is processing in which, in a case where the number of pages of the printing job is large, the RIP processing of the printing job can be executed by a plurality of RIP modules in a unit of a specific number of pages. In the job parallel processing, in a case where all of a plurality of consecutive printing jobs from the first printing job are short jobs, it is expected that the RIP processing speed is improved. In addition, in the page parallel processing, in a case where the first printing job is a long job, it is expected that the RIP processing speed is improved.

Here, since the RIP processing can be performed on a plurality of printing jobs in parallel in the job parallel processing, an effect of shortening a waiting time of the printing job before the RIP processing can be expected. However, in a case where the job parallel processing is started and ended, various setting changes are required in accordance with the switching of the processing. Therefore, for example, in a case where the number of short jobs included in a plurality of printing jobs before the RIP processing is small, there is a possibility that the waiting time of the printing job cannot be shortened much or cannot be substantially shortened even in a case where the job parallel processing is executed. For example, since a large memory capacity is required for the start and end of the job parallel processing, the useless switching of the processing may be omitted in consideration of the load on the memory. In the printing control system 1 according to the present exemplary embodiment, in consideration of the above-described points, a timing of starting the job parallel processing is set to a case where printing jobs having the number of pages equal to or smaller than the number of pages set in advance are consecutive for the number equal to or larger than the consecutive number set in advance, and thus it is possible to complete the RIP processing in a short time while reducing the number of times of processing switching. A specific process of the RIP processing will be described later.

The post-processing unit 50 converts the intermediate data on which the RIP processing is completed into raster data (specifically, bitmap data) that can be output by the printer device 2, and outputs the raster data to the printer device 2. The post-processing unit 50 starts an operation based on a rasterization instruction transmitted from the RIP control unit 41. The rasterization instruction includes various types of information necessary for generating raster data from the intermediate data on which RIP processing has been performed. The post-processing unit 50 includes a page layout unit 51, a rasterization unit 52, and a data transmission unit 53. In addition, in the post-processing unit 50, for example, rasterization processing may be performed at a high speed using a high-performance hardware function such as an accelerator.

The page layout unit 51 can perform layout disposition (for example, 2UP printing or 4UP printing) of each page of the intermediate data in the printer device 2. In addition, the rasterization unit 52 can convert each page of the laid-out intermediate data into bitmap data. Further, the data transmission unit 53 can transmit the data converted into the bitmap data to the printer device 2 as raster data. In addition, at least some functions of the post-processing unit 50 (for example, the function of the rasterization unit 52) can also be performed by the RIP unit 40.

Hereinafter, data conversion processing performed by the printing control system 1 including the above-described configuration will be described with reference to FIGS. 5 to 7 as an example. A process of the data conversion processing described below, specifically, a process of the RIP processing may be processing executed by the processor 11 based on a program. In this regard, the RIP processing described below may be provided in a form of a program (in other words, a printing control program) such as software including an instruction for causing the processor to execute a predetermined operation, in a form of a non-transitory recording medium in which the program is stored, or in a form of an application program provided via a network or the like.

In addition, in the RIP processing process described below, a case where the RIP processing information shown in FIG. 4 is input through the user interface 16 will be appropriately described as a specific example for ease of understanding. That is, a case where the threshold value n corresponding to the maximum value of the number of pages as a target of the short job is 2 pages, the threshold value m of the consecutive number of jobs as a target of the job parallel processing is 5, the maximum value Xmax of a degree of parallelism per job of the job parallel processing is 1, and the maximum value Ymax of a degree of parallelism of the job is 2 will be described as an example.

FIG. 5 is a flowchart showing an example of an operation of the printing control system shown in FIG. 1. The printing control system 1 of the present exemplary embodiment may include at least a step of converting the received printing job into a data format that is printable using the RIP module (for example, corresponding to step S03 or the like described later), a step of determining whether the printing job before data conversion reaches a consecutive number set in advance (corresponding to step S01 described later), a step of determining whether the number of pages included in the printing job before data conversion exceeds the number of pages set in advance in a case where the printing job before data conversion reaches the consecutive number set in advance (corresponding to step S03 described later), and a step of executing the job parallel processing of activating a plurality of RIP modules to prepare the plurality of RIP modules 43A, 43B, ... in a case where a determination is made that the printing job having the number of pages equal to or less than the number n set in advance is consecutive for the number equal to or larger than the consecutive number m, respectively assigning the plurality of RIP modules 43A, 43B, ... to a plurality of printing jobs before data conversion, and performing parallel processing of the data conversion on the plurality of printing jobs before data conversion (corresponding to step S04 described later). Details will be described below.

The data conversion process performed by the printing control system 1 of the present exemplary embodiment is started, for example, by the terminal device 3 transmitting the printing job. In the printing control system 1, in a case where the reception of the printing job is started, the job control unit 30 starts analyzing and managing the received printing jobs in the order in which the printing jobs are received, and transmits the RIP instruction corresponding to the printing job to the RIP unit 40. The RIP control unit 41 receives the RIP instruction to specify the number of printing jobs waiting for the RIP processing (hereinafter, referred to as "pre-RIP jobs"), and determines whether the consecutive number of the pre-RIP jobs is equal to or larger than the threshold value m (step S01).

In a case where the consecutive number of the pre-RIP jobs has not reached the threshold value m (No in step S01), the RIP control unit 41 executes the page parallel processing (step S02).

Details of the page parallel processing will be described below. In a case where the page parallel processing is completed, the process returns to step S01.

In general, the reception of the printing job is always possible while the printing control system 1 is in operation. Therefore, in a case where the number of times of reception of the printing job is large in a short time, a plurality of pre-RIP jobs are in a state of waiting for the RIP processing. In a case where a plurality of pre-RIP jobs (for example, five or more) are accumulated in the pre-RIP printing job data storage unit 35 and the number thereof, that is, the consecutive number of the printing jobs is equal to or larger than the threshold value m (Yes in step S01), the RIP control unit 41 refers to the number of pages of the first to m-th pre-RIP jobs among the plurality of consecutive pre-RIP jobs and determines whether the number of pages is equal to or less than the threshold value n (step S03).

In a case where the number of pages of any of the first to m-th pre-RIP jobs is larger than the threshold value n (No in step S03), the processing proceeds to step S02 to execute the page parallel processing described above. On the other hand, in a case where the numbers of pages of all of the first to m-th pre-RIP jobs are equal to or less than the threshold value n (Yes in step S03), the RIP control unit 41 determines that the short jobs are consecutive and executes the job parallel processing. Details of the job parallel processing will be described later. Even in a case where the job parallel processing is completed, the processing returns to step S01.

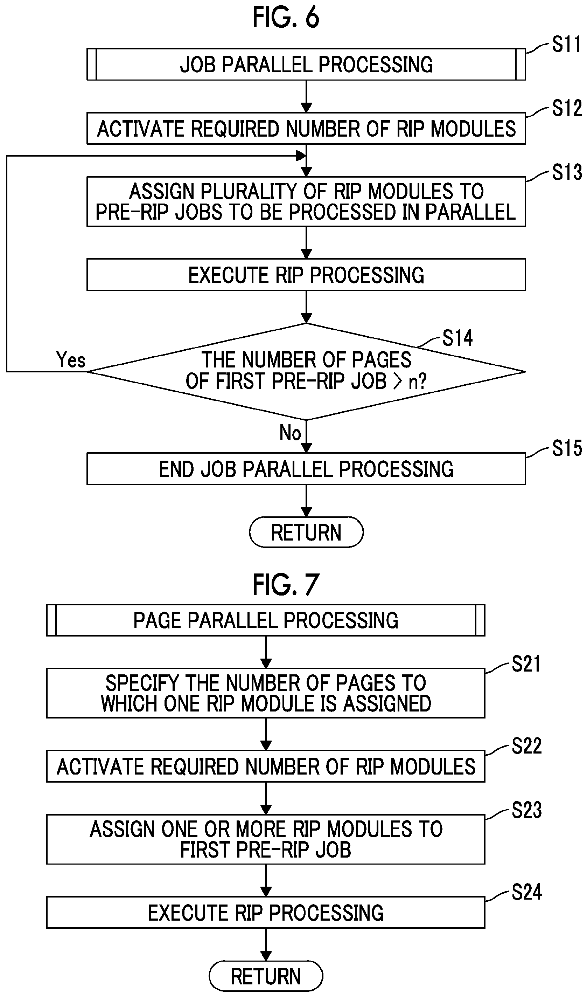

FIG. 6 is a flowchart showing an example of a subroutine of job parallel processing shown in FIG. 5. In a case where the job parallel processing is started, the RIP control unit 41 first activates a predetermined number of RIP modules required for executing the job parallel processing (step S11). Here, the RIP module 43A is always activated. In addition, the maximum value Xmax of the degree of parallelism per job of the job parallel processing is 1, and the maximum value Ymax of the degree of parallelism of the job is 2. In the printing control system 1 of the present exemplary embodiment, since the number of RIP modules to be activated is adjusted to be equal to or less than the maximum value Ymax and the number of RIP modules to be assigned to one printing job in the job parallel processing is adjusted to be equal to or less than Xmax, in a case where the RIP processing information shown in FIG. 4 is input, in the present step S11, one RIP module (for example, the RIP module 43B) may be newly activated.

Next, the RIP control unit 41 respectively assigns the RIP modules 43A and 43B to the pre-RIP jobs in which the RIP processing is executed in parallel, for example, the first to second pre-RIP jobs (step S12). Then, the RIP modules 43A and 43B assigned to the pre-RIP jobs execute the RIP processing of each pre-RIP job in parallel (step S13). The intermediate data obtained by executing the RIP processing is stored in the RIP-completed printing job data storage unit 45 as a printing job in which the RIP processing is completed (hereinafter, also referred to as a "RIP-completed job").

Next, whether the number of pages of the first pre-RIP job after excluding some (specifically, two) RIP-completed jobs on which the RIP processing has been performed in step S13 described above is larger than the threshold value n is determined (step S14). Here, in a case where the number of pages of the first pre-RIP job is equal to or less than the threshold value n (No in step S14), the RIP control unit 41 determines that a short job to be processed by the job parallel processing remains, and returns to step S12 to continue the job parallel processing.

In a case where the number of pages of the first pre-RIP job described above is larger than the threshold value n in a state in which the job parallel processing is executed (Yes in step S14), the job parallel processing is ended (step S15). In a case where the job parallel processing is ended, the RIP module 43B activated in step S11 is stopped, and a reset operation such as switching of settings for executing the job parallel processing is executed. In a case where the job parallel processing is ended, the subroutine shown in FIG. 6 is ended, and the processing returns to step S01 described above.

FIG. 7 is a flowchart showing an example of a subroutine of page parallel processing shown in FIG. 5. In a case where the page parallel processing is started, the RIP control unit 41 specifies the number of pages of the first pre-RIP job to which one RIP module is assigned in order to perform the RIP processing on the first pre-RIP job using one or a plurality of RIP modules (step S21). Next, the RIP control unit 41 activates a predetermined number of RIP modules required for executing the RIP processing described above (step S22). Here, in a case where the first pre-RIP job is a short job, efficient RIP processing can be performed with only the RIP module 43A that is constantly activated, and thus the new RIP module is not activated. Then, the RIP control unit 41 respectively assigns one or a plurality of the RIP modules 43A, 43B, ... in operation to the specified number of pages of the first pre-RIP job (step S23). Then, the RIP processing of the pre-RIP job is executed using the assigned one or plurality of RIP modules 43A, 43B, ... (step S24). The intermediate data obtained by executing the RIP processing is stored in the RIP-completed printing job data storage unit 45 as a RIP-completed job. In a case where the above-described processing is ended, the subroutine shown in FIG. 7 is ended, and the processing returns to step S01 described above.

As described above, according to the printing control system 1 and the printing control program according to the present exemplary embodiment, the timing of starting the job parallel processing is set to a case where the printing jobs having the number of pages equal to or less than the number of pages set in advance are consecutive for the number equal to or larger than the predetermined consecutive number. Therefore, for example, the number of times of switching of processing in a case where a short job and a long job are alternately input can be reduced. Accordingly, it is possible to save a memory capacity required for data conversion of the consecutive printing jobs, as compared to a case where processing is switched based only on the number of pages of the printing job. In addition, the RIP processing can be executed in the order in which the received printing jobs are received.

As an option, in the above-described exemplary embodiment, the number of RIP modules to be assigned to one printing job in the job parallel processing is specified based on the maximum value Xmax input to the user interface 16. However, the number of RIP modules to be assigned to one printing job can also be variable depending on the printing job. Specifically, for example, some printing jobs include additional information such as a transparent effect or a shading object. The printing job including such additional information may take a longer time for the RIP processing than the printing job not including the additional information. Therefore, in a case where the printing job includes the additional information, for example, the number of RIP modules to be assigned to the printing job may be adjusted in consideration of the additional information. The adjustment may not be limited to the maximum value Xmax input to the user interface 16. Therefore, for example, a data table for adjustment may be prepared in advance in the printing control system 1, and in a case where a printing job including specific additional information is received, the number of RIP modules to be assigned may be increased based on the data table.

In addition, as an option, in the printing control system 1, other processing can be interrupted in order to temporarily secure a memory capacity required for the RIP processing. Specifically, in the above-described RIP processing, a large memory capacity is required according to the number of RIP modules activated in the RIP unit 40. Therefore, in a case where the number of the RIP modules activated in the RIP unit 40 is large, the memory capacity in the printing control system 1 may be insufficient. In consideration of this point, in the present exemplary embodiment, in a case where the memory capacity for executing the job parallel processing or the page parallel processing is insufficient, the processing executed by the components other than the RIP unit 40, specifically, the job control unit 30 or the post-processing unit 50 can be temporarily interrupted, and the memory capacity for executing the job parallel processing or the page parallel processing can be secured.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present disclosure is not limited to the above-described exemplary embodiments, and can be variously modified and implemented without departing from the gist of the present disclosure. All of the above are included in the technical idea of the present disclosure. **In** addition, unless otherwise specified in the specification, the respective components of the present disclosure are not limited to one and may be present in a plurality.

### (Supplementary Notes)

(((1))) A printing control system comprising:
   a processor configured to:
      convert printing jobs that are received into printable data formats using a data conversion module;
      determine whether the number of pages included in the printing jobs before data conversion exceeds the number of pages set in advance in a case where the printing jobs before the data conversion reach a consecutive number set in advance; and
      execute, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion; and
   a memory.
(((2))) The printing control system according to (((1))),
   wherein the processor is configured to:
   execute, in a case where the number of pages included in the printing jobs on which the data conversion is to be performed exceeds the number of pages set in advance, page parallel processing of activating the plurality of data conversion modules, respectively assigning the plurality of data conversion modules to specific pages of the printing jobs on which the data conversion is to be performed, and performing parallel processing of the data conversion on the printing jobs on which the data conversion is to be performed.
(((3))) The printing control system according to (((1))) or (((2))),
   wherein the processor is configured to:
   end the job parallel processing in a case where a determination is made that the number of pages of the printing jobs on which the data conversion is to be performed is larger than the number of pages set in advance in a state in which the job parallel processing is executed.
(((4))) The printing control system according to any one of (((1))) to (((3))), further comprising:
   a user interface configured to set at least one of the consecutive number set in advance or the number of pages set in advance.
(((5))) The printing control system according to any one of (((1))) to (((4))),
   wherein the processor is configured to:
   adjust the number of the plurality of data conversion modules respectively assigned to the plurality of printing jobs before the data conversion to be equal to or less than a maximum assignment number set in advance.
(((6))) The printing control system according to any one of (((1))) to (((5))),
   wherein the processor is configured to:
   adjust the number of the plurality of data conversion modules to be equal to or less than a maximum module number set in advance.
(((7))) The printing control system according to any one of (((1))) to (((6))),
   wherein the processor is configured to:
   collect additional information included in the printing jobs before the data conversion; and
   adjust, based on the additional information, the number of data conversion modules constituting the plurality of data conversion modules assigned to the printing jobs before the data conversion.
(((8))) The printing control system according to any one of (((1))) to (((7))),
   wherein the processor is configured to:
   interrupt processing being executed other than the data conversion in a case where a memory capacity required for the parallel processing is insufficient.
(((9))) A printing control program that causes a processor included in a printing control system to execute processing of:
   converting printing jobs that are received into printable data formats using a data conversion module;
   determining whether the number of pages included in the printing jobs before data conversion exceeds the number of pages set in advance in a case where the printing jobs before the data conversion reach a consecutive number set in advance; and
   executing, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion.

With the printing control system of (((1))), it is possible to reduce the number of times of switching processing in a case where a printing job having a small number of pages and a printing job having a large number of pages are alternately input, by executing the job parallel processing only in a case where printing jobs having a small number of pages are consecutive for a predetermined number. Accordingly, it is possible to save a memory capacity required for data conversion of the consecutive printing jobs, as compared to a case where processing is switched based only on the number of pages of the printing job.

With the printing control system of (((2))), the page parallel processing is executed, so that a speed of the data conversion in a case of converting data of a printing job having a large number of pages is higher, as compared to a case of uniformly performing the data conversion regardless of the number of pages of the job.

With the printing control system of (((3))), in a case where printing jobs having a small number of pages are not consecutive, the job parallel processing is quickly ended, and thus the data conversion of the printing job having a large number of pages is not performed in the state of the job parallel processing.

With the printing control system of (((4))), the consecutive number and the number of pages set in advance can be set and changed by a user.

With the printing control system of (((5))), the assignment of the data conversion modules in the job parallel processing can be adjusted by the user.

With the printing control system of (((6))), the assignment of the data conversion modules in the job parallel processing can be adjusted by the user.

With the printing control system of (((7))), even in a case where the additional information having an effect on the data conversion speed, such as a transparent effect or shading, is included in the printing job, the assignment of the data conversion module in consideration of the presence or absence of the additional information can be performed.

With the printing control system of (((8))), a processing speed of the entire printing control is increased by executing the data conversion with priority over other processing, as compared to a case where the data conversion is set to a standby state in a case where the memory capacity required for the data conversion is insufficient.

With the printing control program of (((9))), it is possible to reduce the number of times of switching processing in a case where a printing job having a small number of pages and a printing job having a large number of pages are alternately input, by executing the job parallel processing only in a case where printing jobs having a small number of pages are consecutive. Accordingly, it is possible to save a memory capacity required for data conversion of the consecutive printing jobs, as compared to a case where processing is switched based only on the number of pages of the printing job.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printing control system
2: printer device
3: terminal device
11: processor
12: ROM
13: RAM
14: storage
15: communication interface
16: user interface
17: I/O
20: data processing unit
30: job control unit
31: external interface unit
32: input data management unit
33: input data analysis unit
35: pre-RIP printing job data storage unit
40: RIP unit
41: RIP control unit
42: RIP module group
43A, 43B: RIP module (example of data conversion module)
45: RIP-completed printing job data storage unit
50: post-processing unit
51: page layout unit
52: rasterization unit
53: data transmission unit
NW: network

## Claims

1. A printing control system comprising:
a processor configured to:
convert printing jobs that are received into printable data formats using a data conversion module;
determine whether the number of pages included in the printing jobs before data conversion exceeds the number of pages set in advance in a case where the printing jobs before the data conversion reach a consecutive number set in advance; and
execute, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion; and
a memory.

2. The printing control system according to claim 1,
wherein the processor is configured to:
execute, in a case where the number of pages included in the printing jobs on which the data conversion is to be performed exceeds the number of pages set in advance, page parallel processing of activating the plurality of data conversion modules, respectively assigning the plurality of data conversion modules to specific pages of the printing jobs on which the data conversion is to be performed, and performing parallel processing of the data conversion on the printing jobs on which the data conversion is to be performed.

3. The printing control system according to claim 1 or 2,
wherein the processor is configured to:
end the job parallel processing in a case where a determination is made that the number of pages of the printing jobs on which the data conversion is to be performed is larger than the number of pages set in advance in a state in which the job parallel processing is executed.

4. The printing control system according to any one of claims 1 to 3, further comprising:
a user interface configured to set at least one of the consecutive number set in advance or the number of pages set in advance.

5. The printing control system according to any one of claims 1 to 4,
wherein the processor is configured to:
adjust the number of the plurality of data conversion modules respectively assigned to the plurality of printing jobs before the data conversion to be equal to or less than a maximum assignment number set in advance.

6. The printing control system according to any one of claims 1 to 5,
wherein the processor is configured to:
adjust the number of the plurality of data conversion modules to be equal to or less than a maximum module number set in advance.

7. The printing control system according to any one of claims 1 to 6,
wherein the processor is configured to:
collect additional information included in the printing jobs before the data conversion; and
adjust, based on the additional information, the number of data conversion modules constituting the plurality of data conversion modules assigned to the printing jobs before the data conversion.

8. The printing control system according to any one of claims 1 to 7,
wherein the processor is configured to:
interrupt processing being executed other than the data conversion in a case where a memory capacity required for the parallel processing is insufficient.

9. A printing control program that causes a processor included in a printing control system to execute processing of:
converting printing jobs that are received into printable data formats using a data conversion module;
determining whether the number of pages included in the printing jobs before data conversion exceeds the number of pages set in advance in a case where the printing jobs before the data conversion reach a consecutive number set in advance; and
executing, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion.

10. A printing control method comprising:
converting printing jobs that are received into printable data formats using a data conversion module;
determining whether the number of pages included in the printing jobs before data conversion exceeds the number of pages set in advance in a case where the printing jobs before the data conversion reach a consecutive number set in advance; and
executing, in a case where a determination is made that the printing jobs having the number of pages equal to or less than the number of pages set in advance are consecutive for the number equal to or larger than the consecutive number, job parallel processing of activating a plurality of the data conversion modules to prepare the plurality of data conversion modules, respectively assigning the plurality of data conversion modules to a plurality of the printing jobs before the data conversion, and performing parallel processing of the data conversion on the plurality of printing jobs before the data conversion.

## Amended claims

### Amended claims in accordance with Rule 137(2) EPC.

1. A printing control system (1) comprising:
a processor (11) configured to:
convert printing jobs that are received into printable data formats using a data conversion module (43A, 43B);
determine whether the number of pages included in the printing jobs before data conversion exceeds the number of pages set in advance in a case where the printing jobs before the data conversion reach a consecutive number set in advance; and
execute, in a case where a determination is made that the printing jobs having the number of pages equal to or less than the number of pages set in advance are consecutive for the number equal to or larger than the consecutive number, job parallel processing of activating a plurality of the data conversion modules (43A, 43B) to prepare the plurality of data conversion modules (43A, 43B), respectively assigning the plurality of data conversion modules (43A, 43B) to a plurality of the printing jobs before the data conversion, and performing parallel processing of the data conversion on the plurality of printing jobs before the data conversion, wherein the processor (11) is further configured to interrupt processing being executed other than the data conversion in a case where a memory capacity required for the parallel processing is insufficient; and
a memory (12, 13, 14).

2. The printing control system (1) according to claim 1,
wherein the processor (11) is configured to:
execute, in a case where the number of pages included in the printing jobs on which the data conversion is to be performed exceeds the number of pages set in advance, page parallel processing of activating the plurality of data conversion modules (43A, 43B), respectively assigning the plurality of data conversion modules (43A, 43B) to specific pages of the printing jobs on which the data conversion is to be performed, and performing parallel processing of the data conversion on the printing jobs on which the data conversion is to be performed.

3. The printing control system (1) according to claim 1 or 2,
wherein the processor (11) is configured to:
end the job parallel processing in a case where a determination is made that the number of pages of the printing jobs on which the data conversion is to be performed is larger than the number of pages set in advance in a state in which the job parallel processing is executed.

4. The printing control system (1) according to any one of claims 1 to 3, further comprising:
a user interface (16) configured to set at least one of the consecutive number set in advance or the number of pages set in advance.

5. The printing control system (1) according to any one of claims 1 to 4,
wherein the processor (11) is configured to:
adjust the number of the plurality of data conversion modules (43A, 43B) respectively assigned to the plurality of printing jobs before the data conversion to be equal to or less than a maximum assignment number set in advance.

6. The printing control system (1) according to any one of claims 1 to 5,
wherein the processor (11) is configured to:
adjust the number of the plurality of data conversion modules (43A, 43B) to be equal to or less than a maximum module number set in advance.

7. The printing control system (1) according to any one of claims 1 to 6,
wherein the processor (11) is configured to:
collect additional information included in the printing jobs before the data conversion; and
adjust, based on the additional information, the number of data conversion modules (43A, 43B) constituting the plurality of data conversion modules (43A, 43B) assigned to the printing jobs before the data conversion.

8. A printing control program that causes a processor (11) included in a printing control system (1) to execute processing of:
converting printing jobs that are received into printable data formats using a data conversion module (43A, 43B);
determining whether the number of pages included in the printing jobs before data conversion exceeds the number of pages set in advance in a case where the printing jobs before the data conversion reach a consecutive number set in advance;
executing, in a case where a determination is made that the printing jobs having the number of pages equal to or less than the number of pages set in advance are consecutive for the number equal to or larger than the consecutive number, job parallel processing of activating a plurality of the data conversion modules (43A, 43B) to prepare the plurality of data conversion modules (43A, 43B), respectively assigning the plurality of data conversion modules (43A, 43B) to a plurality of the printing jobs before the data conversion, and performing parallel processing of the data conversion on the plurality of printing jobs before the data conversion; and
interrupting processing being executed other than the data conversion in a case where a memory capacity required for the parallel processing is insufficient.

9. A printing control method comprising:
converting printing jobs that are received into printable data formats using a data conversion module (43A, 43B);
determining whether the number of pages included in the printing jobs before data conversion exceeds the number of pages set in advance in a case where the printing jobs before the data conversion reach a consecutive number set in advance;
executing, in a case where a determination is made that the printing jobs having the number of pages equal to or less than the number of pages set in advance are consecutive for the number equal to or larger than the consecutive number, job parallel processing of activating a plurality of the data conversion modules (43A, 43B) to prepare the plurality of data conversion modules (43A, 43B), respectively assigning the plurality of data conversion modules (43A, 43B) to a plurality of the printing jobs before the data conversion, and performing parallel processing of the data conversion on the plurality of printing jobs before the data conversion; and
interrupting processing being executed other than the data conversion in a case where a memory capacity required for the parallel processing is insufficient.
